# EUROPEAN PATENT APPLICATION

(11) **EP 0 655 424 A1**
(43) Date of publication of application: **31.05.1995**
(21) Application number: 94203346.5
(22) Date of filing: 17.11.1994
(51) Int. Cl.: C03B 37/15, C03C 25/00

(54) **Method of bonding two optical surfaces together, optical assembly thus formed, and particle-optical apparatus comprising such an assembly**

(30) Priority: 25.11.1993 BE 9301298
(71) Applicant: PHILIPS ELECTRONICS N.V., 5621 BA Eindhoven (NL)
(72) Inventor: Haisma, Jan, NL-5656 AA Eindhoven (NL); Troost, Kars Zeger, NL-5656 AA Eindhoven (NL); Groenen, Johannes Josephus Cornelis, NL-5656 AA Eindhoven (NL); Michielsen, Theodorus Martinus, NL-5656 AA Eindhoven (NL)
(74) Representative: Bakker, Hendrik

(57) **Abstract**

A method of bonding together two optical surfaces, such as a scintillator plate and a plate which is formed by the ends of a bundle of optical fibres. An assembly of this kind can be used in an electron microscope in order to convert the electron image into an image of visible light which is transported, for example to a detector. It is specified that the two surfaces to be bonded must be bonded rigidly to one another without an intermediate layer and without a noticeable intermediate space( *i.e.* a space much smaller than the wavelength of the visible light). In accordance with the invention, this is achieved by optically polishing and cleaning the surfaces to be bonded, after which they are arranged one against the other without an intermediate material, the contacting surfaces then being subjected to a thermal treatment at a temperature beyond the fusion temperature but below the softening temperature of the material of each of the surfaces.

## Description

The invention relates to a method of bonding two optical surfaces together, comprising the following steps: forming mutually complementary surfaces, subjecting the surfaces to be bonded to a polishing treatment, and arranging the surfaces to be bonded against one another.

The invention also relates to an assembly of optical components manufactured by means of the cited method, and to a particle-optical apparatus comprising such an assembly.

A method of this kind is known from United States Patent Specification No. 4,810,318.

It is generally known to bond optical surfaces together by means of a layer of adhesive, for example for the manufacture of lens systems used in photographic cameras. However, there are also applications imposing special requirements as regards the bond of the optical surfaces, which requirements cannot be satisfied by the customary adhesive bonds. For example, it may occur that an optical system thus assembled is to be used in an environment with radiation which is detrimental to the intermediate layer, for example X-rays, ultraviolet radiation or particle radiation such as electrons in, for example an electron microscope. The customary organic types of adhesive cannot be used in these environments.

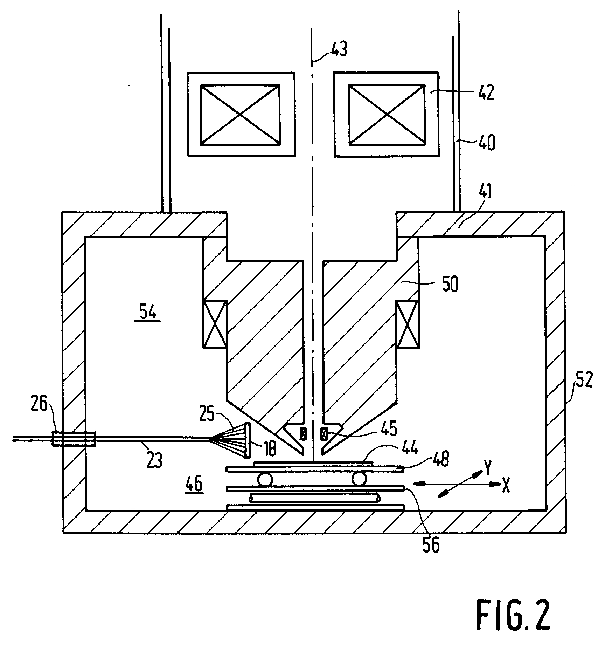

The cited United States Patent Specification (notably Fig. 2 and the associated description) describes how the flat surfaces of two glass lens halves are bonded together by means of intermediate layers of an anorganic material. A layer of indium-tin oxide having a thickness of 0.5 µm is provided on one of the lens halves and on this layer there is provided a layer of BaTiO₃ of a thickness of 2 µm, on which there is provided a layer of indium-tin oxide again having a thickness of 0.5 µm. The latter layer is slightly polished with cerium oxide, and so is the surface of the other lens half to be bonded. The lens halves are subsequently arranged against one another by way of the optical surfaces, connection being achieved by direct bonding. The stack of intermediate layers thus formed has an optical-electrical function in the present lens system; the polarizing effect of the central layer is controlled by application of an electric voltage to the two outer layers.

Intermediate layers between the optical surfaces to be bonded are undesirable for some applications. In this respect a distinction should be made between thick intermediate layers and thin intermediate layers. Thick intermediate layers are undesirable for applications where in a first optical medium light is generated which is subsequently applied to a detector *via* a second medium. An example in this respect is a detector system in an electron microscope in which electrons produce light in a scintillator plate (the first medium), which light is collected by a fibre bundle (the second medium), for example so as to be applied to a detector. If a thick intermediate layer were present between the scintillator plate and the end face of the fibre bundle, due to the large distance between the two surfaces light generated in a given location in the plate will be incident not only on the fibre associated with the relevant location but also on neighbouring fibres. This affects the locational resolution of this system. Thin intermediate layers between the optical surfaces are undesirable (for example, for the same application) because interference phenomena may then occur between the two optical surfaces (also known as Newton rings), which phenomena substantially reduce the locational resolution of such an optical detector system because interference causes light to be incident on fibres which do not correspond to the location where the light is generated. The latter problem occurs also if no intermediate layer is provided and the two surfaces are simply placed one against the other. Finally, thick as well as thin intermediate layers have the drawback that reflection losses occur on these layers if the refractive index of the intermediate layer deviates from that of the materials to be bonded.

It is an object of the invention to solve the described problems by providing a method of bonding two optical surfaces together which produces a bond which can be used in a large variety of environments and which does not affect the resolution and the reliability of optical detectors in which it is used. To this end, the method of the invention is characterized in that the polishing treatment consists of optical polishing, which treatment is applied to both surfaces, the two polished surfaces being subjected to a cleaning treatment, the two polished and cleaned surfaces being arranged one against the other without an intermediate material and the contacting surfaces being subjected to a thermal treatment at a temperature beyond the fusion temperature but below the softening temperature of the material of each of the surfaces to be bonded. In this respect the fusion temperature is to be understood to mean the temperature at which a chemical surface reaction commences. It has been found that a suitable bond can thus be achieved between the surfaces, the thermal treatment ensuring suitable bonding. Moreover, because of the thermal treatment in said temperature range the bond is capable of withstanding operational temperatures up to the temperature at which the bond has been realised.

It is to be noted that European Patent Specification No. 0 136 050 discloses a method in which two polished and cleaned surfaces are also arranged against one another without an intermediate material, after which they are subjected to a thermal treatment. However, the cited document does not concern the bonding of two optical surfaces (*i.e.* surfaces transmitting visible light in a non-diffusive manner) but two bodies of a crystalline silicon which are joined so as to form a pressure transducer. The method described in the cited Patent Specification in no way concerns the bonding of optical surfaces.

Experiments have demonstrated that the method of the invention is suitable for bonding together two optical surfaces of the same composition. However, it has also been found that surfaces of dissimilar composition can also be suitably bonded together in this manner. The method of the invention can be used particularly advantageously if at least one of the two surfaces is the surface of a composite material. In one version of the method in accordance with the invention the surface of the composite material is formed by the ends of the fibres of a beam of optical fibres. This enables light generated in a material with the first surface to be transferred practically without loss to the fibre bundle whereby the light is transported further to a detector in a different location.

The desired degree of smoothness of the surface of the bundle of optical fibres can be achieved by a suitable choice of the hardness of the fibre material; experiments have shown that an optical choice is such that the optical fibres consist of a core material and a cladding material exhibiting a difference in Knoop's hardness of less than 4 GPa. It has been found that a closed, smooth surface (*i.e.* a surface without pits) is possible in this range. A suitable choice of these materials is notably such that the core material has a Knoop's hardness of between 5 and 6 GPa and the cladding material has a Knoop's hardness of between 4 and 5 GPa. Such a surface of the fibre bundle can be readily polished by means of a polishing medium containing a mixture of an alkaline solution of colloidal particles (of a size in the nanometer range) of silicon oxide, water and glycerine. This mixture contains notably between 30 and 70 vol. % of an alkaline solution of colloidal particles of silicon oxide, between 30 and 70 vol. % of water, and between 0,5 and 10 vol. % of glycerine. When this medium is used on a background having a Shore D hardness of between 20 and 50, a surface roughness of approximately 1 nm (Root Mean Square Value) can be achieved.

The other surface to be bonded can be formed by the surface of a scintillator material, notably by yttrium aluminium garnet (YAG) substituted with terbium (Tb) or with cerium (Ce). Experiments have shown that in that case a sufficiently smooth surface is obtained if polishing is executed with a polishing medium containing a mixture of an alkaline solution of colloidal particles of a size in the nanometer range of silicon oxide and alumina grains (Al₂O₃) having a mean diameter of between 20 and 100 nm. When this medium is used on a background having a Shore D hardness of between 20 and 50, a surface roughness of approximately 1 nm can be achieved.

The invention will be described in detail hereinafter with reference to the Figures in which corresponding reference numerals denote corresponding elements. Therein:
Fig. 1 is a sectional view of a transmission electron microscope comprising an optical assembly manufactured in accordance with the invention,
Fig. 2 is a sectional view of a part of a scanning electron microscope comprising an optical assembly manufactured in accordance with the invention,
Fig. 3a shows an assembly consisting of a YAG scintillator plate and a fibre bundle, with a non-polished surface of the fibre bundle and with an excessive distance between the fibre bundle and the YAG plate,
Fig. 3b shows an assembly consisting of a YAG scintillator plate and a fibre bundle, with a polished surface of the fibre bundle and a smaller distance between the fibre bundle and the YAG plate, and
Fig. 3c shows an assembly consisting of a YAG scintillator plate and a fibre bundle, having polished surfaces, manufactured in accordance with the invention.

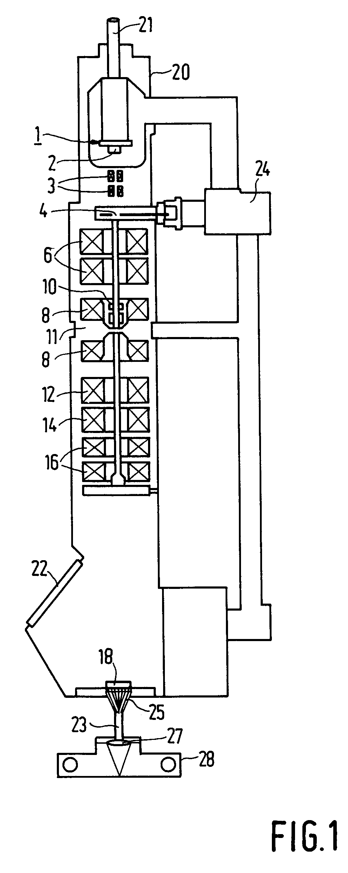

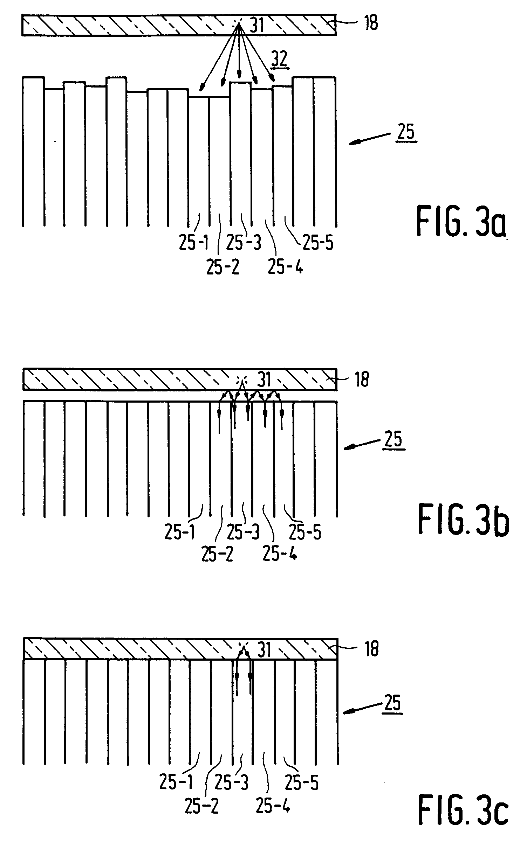

The transmission electron microscope shown in fig. 1 comprises an electron source 1 with an electron-emissive element 2, a beam alignment system 3, and a beam diaphragm 4, a condenser lens 6, an objective lens 8, a beam scanning system 10, an object space 11, a diffraction lens 12, an intermediate lens 14, a projection lens 16 and a position-sensitive electron detector 18. The objective lens 8, the intermediate lens 14 and the projection lens 16 together constitute an imaging lens system. These elements are accommodated in a housing 20 with an electric supply lead 21 for the electron source, a viewing window 22 and a vacuum pumping device 24. The electron detector 18 is formed by an electron-sensitive entrance face, such as a scintillator plate of yttrium aluminium garnet (YAG) substituted with terbium (Tb) or with cerium (Ce). The detector plate 18 is connected to an end 25 of a fibre bundle 23 for the transmission of optical signals to the lens 27 of a photocamera 28. Electrons incident on the detector plate 18 cause light pulses which are collected by the end 25 of the fibre bundle 23 so as to be transmitted to the photocamera *via* the lens 27. The connection between the detector plate 18 and the fibre bundle 23 will be described in detail with reference to Fig. 3.

Fig. 2 shows a part of a column 40 of a scanning electron microscope. As is customary in such an instrument, a beam of electrons is produced by an electron source (not shown in the Figure), which beam extends along the optical axis 43 of the instrument. This electron beam can traverse one or more electromagnetic lenses, such as a condenser lens 42, after which it reaches the lens 50. This lens forms part of a magnetic circuit which also consists of the wall 52 of the specimen chamber 54. The lens 50 is used to form a focus with the electron beam in order to scan the specimen 44. Scanning takes place by moving the electron beam across the specimen, in the x-direction as well as in the y-direction, by means of scan coils 45 arranged in the lens 50. The specimen 44 is arranged on a specimen table 46 which comprises a support 48 for the x-displacement and a support 56 for the y-displacement. A specimen area to be examined can be selected by means of these two supports. When a specimen is irradiated by a primary beam of primary electrons, secondary electrons are generated; these electrons are detected by the YAG detector plate 18, after which the light generated in the manner described with reference to Fig. 1 is transported further so as to be processed. The position-dependent distribution of backscattered electrons as present in an electron backscattering pattern (EBSP) can also be detected *via* the assembly formed by the detector plate 18 and the fibre bundle 23.

Fig. 3a illustrates the problems which arise when a detector plate (YAG plate) is connected, with a clearance, to an insufficient polished end of a fibre bundle. Thus, there is shown an YAG plate 18 which is connected to an end of a fibre bundle 25. It may be that this end is connected to the plate 18 *via* an adhesive or another intermediate substance. During use in an electron microscope, electrons are incident on the YAG plate 18 in which they generate light, for example at the location 31. The light emanates from the plate and propagates underneath the plate in a plurality of directions; consequently, not only the optical fibre 25-3 associated with the point 31 receives light, but also neighbouring fibres, for example the fibres 25-1, 25-2, 25-4 and 25-5. As a result, the locational resolution of the plate 18 is substantially reduced by this spreading of the light. The same effect occurs when the distance from the end is reduced but the surface of the end is insufficiently smooth. In that situation an excessive distance may still exist in given locations between the plate and the bundle end.

Fig. 3b illustrates the problems arising when the YAG plate 18 is connected to a polished end of the fibre bundle 25 with a small gap. In this case the problem of light spreading may be mitigated, but the problem of multiple reflections between the location 31 and the end of the fibre bundle 25 still exists. Light arising at the location 31 is then again transmitted to fibres which are not associated with this location. This problem cannot be simply solved because some clearance will always remain between the lower face of the YAG plate and the end of the fibre bundle if no further steps are taken.

Fig. 3c shows the situation in which the fibre bundle 25 adjoins the YAG plate 18 without any intermediate space. The described problems are now solved. If the YAG plate 18 is sufficiently thin, light arising at the location 31 is intercepted and conducted further exclusively by the associated fibre 25-3.

In order to achieve the required intimate connection of the end of the fibre bundle 25 to the YAG plate 18 it is necessary to subject the plate as well as the end to a special treatment. To this end, for the YAG plate there is chosen a material of garnet monocrystal substituted in dodecaeder locations in the crystal lattice with terbium (Y_{2.995}Tb_{0.005}Al₅O₁₂). Substitution with cerium, however, is also possible. Experiments have shown that for polishing a mixture of Syton (a colloidal solution of SiO₂ grains of approximately 30 nm in a KOH or NaOH solution with a pH of approximately 10) and Al₂O₃ grains offers the desired results. The Al₂O₃ grains then have a mean diameter of between 10 and 500 nm, preferably 50 nm. 5 grams of Al₂O₃ grains were mixed with 0.75 l of Syton. For the polishing background a material having a Shore D hardness of between 20 and 50, preferably between 30 and 40, proved to offer suitable results. These polishing media enable a surface roughness of better than 1 nm RMS (Root Mean Square) to be achieved. After polishing, the plate is cleaned by immersion in 85% H₃PO₄ during 20 minutes, followed by rinsing in de-ionized water; subsequently, dust and possibly organic contaminations are removed by scrubbing on a cloth in de-ionized water. This is followed by immersion for 20 minutes again in 85% H₃PO₄, rinsing in de-ionized water, and finally dry spinning.

Polishing of the fibre bundle was found to offer the desired results if the fibre material was chosen so that it satisfied the condition that the difference between the hardness of the core material and that of the cladding material should amount to 4 GPa, preferably 1.5 GPa. The hardness of the core should be greater than that of the cladding. For the customary types of glass this requirement can be satisfied in the case of a hardness of the core material of between 5 GPa and 6 GPa and a hardness of the cladding material of between 4 GPa and 5 GPa. The requirements set forth can be satisfied by choosing for the core a borosilicate glass containing lanthanum oxide, barium oxide, zirconium oxide and tantalum oxide and having a refractive index of 1.805 and a Knoop's hardness in the bulk glass of 5.5 GPa; in that case a borosilicate glass having a refractive index of 1.487 and a Knoop's hardness in the bulk glass of 4.5 GPa is chosen for the cladding.

For the fibre bundle thus assembled a polishing medium is chosen which consists of a mixture of Syton, de-ionized water and glycerine; the mixing ratio amounts to from 30 to 70 vol. % Syton (preferably 50%) from 30 to 70 vol. % water (preferably 50%), and from 0.5 to 10 vol. % glycerine (preferably 2%). The polishing background is then the same as for the YAG plate. These polishing media enable a surface roughness of better than 1 nm RMS (Root Mean Square) to be achieved. After polishing, dust and any organic contaminations are removed from the plate by scrubbing on a cloth in de-ionized water. Subsequently, rinsing in de-ionized water takes place, followed by spin drying.

The surfaces thus polished and cleaned are arranged one against the other, possibly under a slight pressure (of the order of magnitude of 1 kg/cm²), resulting in an initial bond between the surfaces. Subsequently, the assembly thus formed is maintained at a temperature of 450 °C for 10 hours; it has been found that the bond strength increases up to from 10 to 100 kg/cm² during this annealing step. The bond between the two components thus becomes so strong that the YAG plate can be ground and polished to a thickness desired for the relevant application of the assembly. For use in a transmission electron microscope (in which the beam of primary electrons has an energy of the order of magnitude of 100 KeV) a thickness of the order of magnitude of from some to some tens of micrometers is desired (in dependence on the desired locational resolution and the detector efficiency). For use in a scanning electron microscope in which the electrons are scattered on non-transparent surfaces and the beam of primary electrons has an energy of the order of magnitude of 30 KeV, a thickness of the order of magnitude of a few micrometers is desired.

## Claims

1. A method of bonding two optical surfaces together, comprising the steps of:
- forming the surfaces to be bonded so as to be mutually complementary,
- subjecting the surfaces to be bonded to a polishing treatment,
- arranging the surfaces to be bonded against one another,
characterized in that
- the polishing treatment consists of optical polishing,
- the two polished surfaces are subjected to a cleaning treatment,
- the two polished and cleaned surfaces are arranged one against the other without an intermediate material,
- the contacting surfaces are subjected to a thermal treatment at a temperature beyond the fusion temperature but below the softening temperature of the material of each of the surfaces to be bonded.

2. A method as claimed in Claim 1, characterized in that at least one of the two surfaces to be bonded is formed by the surface of an ordened composite material.

3. A method as claimed in Claim 2, characterized in that the surface of the composite material to be bonded is formed by the ends of the fibres of a bundle of optical fibres.

4. A method as claimed in Claim 3, characterized in that the optical fibres consist of a core material and a cladding material, the difference between the Knoop's hardnesses of the two materials being less than 4 GPa.

5. A method as claimed in Claim 4, characterized in that the difference in Knoop's hardness is less than 1.5 GPa.

6. A method as claimed in Claim 4, characterized in that the optical fibres consist of a core material whose Knoop's hardness is between 5 and 6 GPa and a cladding material whose Knoop's hardness is between 4 and 5 GPa.

7. A method as claimed in Claim 6, characterized in that the surface formed by the ends of the optical fibres is polished by means of a polishing medium containing a mixture of an alkaline solution of colloidal particles, of a size in the nanometer range, of silicon oxide, water and glycerine.

8. A method as claimed in Claim 7, characterized in that the mixture in the polishing medium contains an alkaline solution of colloidal particles of silicon oxide of between 40 and 60 vol. %, 40 and 60 vol. % of water, and between 0,5 and 5 vol. % of glycerine.

9. A method as claimed in Claim 3, characterized in that the other surface to be bonded is formed by the surface of a scintillator material.

10. A method as claimed in Claim 9, characterized in that the scintillator material is formed by yttrium aluminium garnet (YAG) substituted with terbium (Tb) or cerium (Ce).

11. A method as claimed in Claim 10, characterized in that the surface of the scintillator material to be bonded is polished by means of a polishing medium containing a mixture of an alkaline solution of colloidal particles, of a size in the nanometer range, of silicon oxide and alumina grains (Al₂O₃) having a mean diameter of between 10 nm and 500 nm.

12. A method as claimed in Claim 8 or 11, characterized in that polishing takes place on a background having a Shore D hardness of between 20 and 50.

13. A method as claimed in the Claims 3 and 10, characterized in that the thermal treatment consists in keeping the surfaces to be bonded at a temperature of between 350 and 550 °C for a period of time of between 1 and 12 hours.

14. An assembly of optical components, consisting of a scintillator plate and a fibre bundle connected to this plate, which scintillator plate has an optically polished surface and which fibre bundle has an optically polished surface which is formed by the ends of the optical fibres of the bundle, the two optically polished surfaces being directly bonded to one another without an intermediate layer.

15. An assembly of optical components as claimed in Claim 14, characterized in that the scintillator plate has a thickness of between 0.5 and 50 µm.

16. A particle-optical apparatus, comprising an assembly of optical components as claimed in Claim 14 or 15.

17. A particle-optical apparatus as claimed in Claim 16, characterized in that it is arranged for transmission electron microscopy and that the scintillator plate has a thickness of between 1 and 50 µm.

18. A particle-optical apparatus as claimed in Claim 16, characterized in that it is arranged for scanning electron microscopy and that the scintillator plate has a thickness of between 0.1 and 10 µm.
